# FASCICULE DE BREVET EUROPEEN

(11) **EP 1 898 593 B1**
(45) Date de publication et mention de la délivrance du brevet: **26.10.2011**
(21) Numéro de dépôt: 07114806.8
(22) Date de dépôt: 23.08.2007
(51) Int. Cl.: H04L 29/06, H04L 29/12, H04M 7/00

(54) **Traversée d'un équipement de traduction d'adresse NAT pour messages de signalisation conformes au protocole SIP**
Traversal einer Adressenübersetzungsvorrichtung NAT für Signalisierungsnachrichten nach dem SIP-Protokoll
NAT address translation device traversal for signalling messages according to the SIP protocol

(30) Priorité: 08.09.2006 FR 0653641
(43) Date de publication de la demande: 12.03.2008
(73) Titulaire: Alcatel Lucent, 75008 Paris (FR)
(72) Inventeur: Levy, Thomas, 75015, PARIS (FR); Froment, Thomas, 91310, LONGPONT SUR ORGE (FR); Hiribarren, Vincent, 91310, LINAS (FR)
(74) Mandataire: Chaffraix, Sylvain

(56) Documents cités:
- US-A1- 2005 259 637
- ROSENBERG IAB J: "Considerations for Selection of Techniques for NAT Traversal" IETF STANDARD-WORKING-DRAFT, INTERNET ENGINEERING TASK FORCE, IETF, CH, 13 février 2005 (2005-02-13), XP015038016 ISSN: 0000-0004
- CAMARILLO J HAUTAKORPI ERICSSON R PENFIELD ACME PACKET A HAWRYLYSHEN JASOMI NETWORKS G: "Functionality of Existing Session Border Controller (SBC)" IETF STANDARD-WORKING-DRAFT, INTERNET ENGINEERING TASK FORCE, IETF, CH, 14 février 2005 (2005-02-14), XP015037667 ISSN: 0000-0004
- ROSENBERG CISCO SYSTEMS J: "Interactive Connectivity Establishment (ICE): A Methodology for Network Address Translator (NAT) Traversal for Offer/Answer Protocols" IETF STANDARD-WORKING-DRAFT, INTERNET ENGINEERING TASK FORCE, IETF, CH, vol. mmusic, no. 10, 31 août 2006 (2006-08-31), XP015046831 ISSN: 0000-0004

## Description

La présente invention est relative aux réseaux de communication. Elle concerne plus précisément le problème de la transmission de messages de signalisation au travers d'équipements de traductions d'adresses tels des « NAT ».

Les réseaux de communication actuels permettant l'établissement de session de communication au moyen de protocoles de signalisation tels H.323, MGCP (*Media Gateway Control Protocol*) ou SIP (*Session Initiation Protocol*) et SDP (*Session Description Protocol*).
Ce protocole SIP est défini par le RFC 3261 de l'IETF (*Internet Engineering Task Forc*e) et il a pour double but de permettre :
- la mise en relation entre deux parties,
- la négociation des caractéristiques de la session à établir (débit vidéo, encodeur (CODEC) à utiliser, etc.), via le protocole SDP.
   Une partie appelante souhaitant appeler une autre partie peut adresser un message de signalisation (« Invite ») à un élément de signalisation, dit « Proxy», contenant son adresse personnelle, l'adresse physique de son terminal (ou, plus généralement, un client, ou encore un « user agent ») et l'adresse personnelle de la partie appelée. L'élément de signalisation dispose des moyens (« registrar ») pour mettre en correspondance l'adresse personnelle de la partie appelée et l'adresse physique du terminal correspondant. Grâce à cette mise en correspondance, le message de signalisation peut être acheminé à la partie appelante.
   Si elle accepte l'appel, celle-ci répond alors par de nouveaux messages de signalisation comportant l'adresse physique du terminal ou client (ou « user agent »). Ainsi, chacun des deux terminaux connaissant l'adresse physique de l'autre partie, ils peuvent établir une connexion IP (*Internet Protocol*) pour la transmission des données (voix, vidéo...).
   Un problème se pose toutefois avec les équipements de traduction d'adresses, connus sous l'acronyme de NAT (« *Network Address Translation* ») ou NAPT (« *Network Adress Port Translation* ») et définis dans le RFC 1631, « *The IP Network Address Translator* », et dans le RFC 3022 « *Traditional IP Network Address Translator (Traditional NAT)* ». Ces équipements sont prévus pour interfacer un sous-réseau (typiquement, un réseau privé) avec le réseau public Internet. Les équipements (terminaux) du sous-réseau ont des adresses physiques IP dont la validité est limitée au sous-réseau. Lorsqu'ils souhaitent établir des communications avec des équipements situés hors du sous-réseau, l'équipement de traduction d'adresses leur affecte une adresse publique temporaire, valable pour le réseau public, et mémorise l'association entre l'adresse privée du client et son adresse publique temporaire.
   L'équipement de traduction d'adresses NAT modifie donc à la volée les messages transmis entre le réseau privé et le réseau public, en
- transformant les adresses privées des terminaux en adresses publiques, dans les entêtes IP des messages sortants, c'est-à-dire allant du réseau privé vers le réseau public, et en
- transformant les adresses publiques des terminaux en adresses privées, dans les entêtes IP des messages entrant, c'est-à-dire allant du réseau public vers le réseau privé.

Un problème se pose donc pour la traversée des équipements de traduction d'adresses par les messages de signalisation SIP/SDP (ou H.323 ou autres). Ce problème est connu sous l'expression « *NAT traversal* » en langue anglaise (traversée de NAT).
Il est par exemple décrit sur l'encyclopédie participative « wikipedia » à l'adresse : « http://en.wikipedia.org/wiki/NAT_traversal.html» et évoqué dans le RFC 3235 de l'IETF, intitulé « *Network Address Translation* (*NAT*) - *Friendly Application Design Guidelines* ». Il a également été exposé dans le draft IETF intitulé « Considérations for Sélection of Techniques for NAT Traversal » de J. Rosenberg, publié en février 2005.

Les protocoles de signalisation, comme SIP et SDP, sont considérés comme des protocoles applicatifs. Le protocole SIP/SDP, par exemple, peut être transmis par le protocole TCP ou UDP, eux-même étant situés au-dessus de IP dans la pile protocolaire. Un message SIP est donc en fait une suite de paramètres encapsulée dans un message TCP ou UDP, lui-même encapsulé dans un message IP.
Les équipements de traduction d'adresses NAT ne modifient que les paramètres situés au niveau de la couche IP, laissant intacts les paramètres situés dans des couches plus hautes.
Autrement dit, les adresses physiques contenues dans les messages SIP et SDP ne sont pas modifiées par les équipements de traduction d'adresses, au contraire des adresses contenues dans les entêtes IP.
Il en résulte que le destinataire (le client appelé) du message de signalisation ne connaîtra que l'adresse privée du client appelant. Or, celle-ci n'ayant du sens que dans le réseau privé, il ne pourra pas y avoir d'établissement de session de communication.

Ce problème étant bien connu, de nombreuses solutions ont été proposées pour le résoudre. On peut distinguer deux approches principales pour résoudre ce problème : des approches basées sur le client appelant et des approches basées sur un serveur ou un équipement du réseau de communication.

Dans la première catégorie, on peut citer le mécanisme STUN (« *Simple Traversal of UDP through NATs* »), décrit dans le RFC 3489. Ce mécanisme permet à un client (ou terminal) de connaître son adresse publique. Ainsi, préalablement à l'émission d'un message vers le réseau public, le client appelant transmet une requête à un serveur STUN situé dans ce réseau public. Celui-ci lui répond par un message contenant l'adresse (et le port) sous laquelle il « voit » le client, c'est-à-dire son adresse publique.
Le client peut alors utiliser cette adresse publique pour indiquer, via le protocole SDP, à quelle adresse il souhaite que recevoir des réponses.
Cette solution souffre toutefois d'une limitation majeure, puisque de nombreux NAT sont dits « symétriques » et associent une adresse publique à un couple de parties. Aussi, l'adresse publique attribuée par le NAT au client peut être différente pour la communication avec le serveur STUN et pour la session à établir avec l'autre partie. Dans un pareil cas, la communication entre le client et l'autre partie ne peut pas être établie.
D'autres propositions, basées sur le même principe, ont été faites pour améliorer la situation, comme les mécanismes TURN (« *Traversal Using Relay NAT* »). Le mécanisme TURN est décrit dans le document « draft-rosenberg-midcom-turn-09.txt », publié en mars 2006 sur le site de l'IETF.
Toutefois ni le mécanisme STUN, ni le mécanisme TURN ne sont adaptés au protocole SIP.
Aussi, un nouveau mécanisme, ICE (« *Interactive Connectivity Establishment* ») a été proposé pour adapter la traversée des messages de signalisation SIP. Il se base sur les mécanismes STUN et TURN en les adaptant. Le mécanisme ICE est décrit dans le document « draft-ietf-mmusic-ice-10.txt», également publié sur le site de l'IETF en août 2006 et intitulé « *Interactive Connectivity Establishment: A Methodology for Network Address Translator (NAT) Traversal for Offer*/*Answer Protocol* ».

La seconde catégorie de solutions repose sur un équipement au sein du réseau de communication. Il est à noter que les premières solutions mettaient en oeuvre un serveur au sein du réseau (serveur STUN, par exemple), mais l'initiative étant celle du client. Dans cette seconde famille de solutions, au contraire, l'initiative et la mise en oeuvre des solutions de traversée de NAT appartient à un équipement de réseau.
Une première solution appartenant à cette famille est par exemple d'associer une passerelle applicative à l'équipement de traduction d'adresses NAT. Ce mécanisme est connu sous le nom de ALG pour « *Application Laye*r *Gateway* » ou « *Application-level Gateway* » en langue anglaise et est défini dans le paragraphe 2.9 du RFC 2663 intitulé « IP Network Address Translator (NAT) Terminology and Considerations » publié en août 1999.
Cette passerelle (ou un NAT ayant les fonctionnalités d'une telle passerelle) dispose des moyens de compréhension des protocoles applicatifs utilisés par les messages. Elle peut notamment comprendre le contenu des messages de signalisation et traduire les adresses physiques contenus dans les messages SDP afin que les parties échangent leurs adresses publiques et non leurs adresses privées et puissent ainsi établir des sessions de communication.

Une variante de cette solution consiste à utiliser à utiliser un contrôleur de session dit SBC (pour « *Session Border Controller* ») qui se situera sur les chemins des messages de signalisation. Ce type de produit permet de contrôler la transmission des sessions de communication et des messages de signalisation entre les deux réseaux. Plus précisément, le SBC peut jouer le rôle d'un élément de signalisation « proxy » SIP qui peut contrôler des moyens de transmission de média (un « media proxy ») par un protocole tel Megaco afin que les sessions de communication s'établissent convenablement entre les parties.
Le draft IETF intitulé « Functionality of Existing Session Border Controller (SBC) », publié en février 2005 décrit plus explicitement le fonctionnement d'un contrôleur de session SBC.

D'autres solutions encore existent dans l'une et l'autre de ces deux grandes catégories, sans qu'aucun ne s'impose définitivement par rapport aux autres.
Du coup, un même réseau de communication peut mettre en oeuvre simultanément plusieurs solutions. Un client de communication ne sait a priori pas si le réseau auquel il est associé met en oeuvre une solution de traversée :
il peut alors mettre en oeuvre une solution de type ICE alors que le réseau met en oeuvre une solution de type ALG ou SBC.
   Le fait de déployer deux solutions est redondant et engendre de la perte de ressources, mais en outre les solutions peuvent se perturber mutuellement et engendrer un mauvais fonctionnement du réseau de communication : les adresses contenues dans les messages de signalisation peuvent être modifiées d'une mauvaise façon, ou alors qu'il ne fallait pas, par l'équipement ALG ou SBC. Finalement, les sessions de communication ne peuvent pas être établies.

Ce problème ne semble pas avoir été soulevé jusqu'à aujourd'hui.
Une solution que l'on peut proposer serait de désactiver manuellement les mécanismes mis en oeuvre par un client SIP (ICE, STUN, TURN...) lorsque celui-ci sait être « attaché » à un SBC ou à une passerelle ALG.
Une telle façon de faire est cependant complexe à mettre en oeuvre: pour qu'un client sache qu'il est attaché à une passerelle ALG ou à un SBC, il doit connaître la topologie du réseau de son fournisseur d'accès. De plus, la configuration doit être manuellement modifiée chaque fois que le client est attaché à un nouveau réseau.
Par ailleurs, cette approche n'est pas optimale puisque dès qu'une solution basée sur une passerelle ALG ou un SBC est déployée, elle est, par construction, préférée à la solution basée sur le client. Or, c'est cette dernière solution qui est généralement optimale puisqu'elle permet au client de maîtriser l'établissement de la session de communication et ne met pas en oeuvre un relais média comme les solutions SBC ou ALG.

Le but de l'invention est de pallier ces inconvénients en proposant une façon de faire cohabiter de façon optimale les solutions basées sur les clients et les solutions basées sur le réseau de communication (ALG, SBC...)

Un premier objet de l'invention est un procédé d'établissement d'une session de communication entre un client (ou « user agent ») de communication appelant et un client de communication appelé, au travers d'un réseau de communication comportant au moins un équipement de traduction d'adresses, dit « NAT ».
Le procédé comporte des étapes de transmissions de messages de signalisation, transitant par le ou les équipements de traduction d'adresses et permettant l'échange des adresses physiques des clients de communication pour l'établissement de la session de communication. Au moins un des clients de communication met en oeuvre une solution de traversée d'équipement de traduction d'adresses.
Le procédé se caractérise :
- d'une part en ce qu'au moins un des clients de communication ajoute au sein d'au moins un message de signalisation émis, un paramètre représentatif de la mise en oeuvre de la solution de traversée d'équipement de traduction d'adresses ; et
- d'autre part, en présence d'un tel paramètre, les équipements du réseau de communication ne mettent pas en oeuvre leurs propres solutions de traversée d'équipement de traduction d'adresses.

Selon des mises en oeuvre de l'invention, le message de signalisation émis est conforme au protocole SIP. Il peut s'agir d'un message « Invite », mais également d'autres types de messages (« Register », « Notify »...)

Le paramètre peut être un entête conforme au protocole SIP, ou bien un paramètre conforme au protocole SDP.

La solution de traversée d'équipement peut être une solution appartenant à un groupe comportant les mécanismes STUN, ICE, TURN...

L'invention peut également prévoir- qu'en l'absence du paramètre, les équipements du réseau de communication mettent en oeuvre leurs propres solutions de traversée d'équipement de traduction d'adresses:

En outre, lorsqu'un équipement du réseau de communication met en oeuvre sa propre solution de traversée, il peut insérer un paramètre dans le message de signalisation sortant représentatif de cette mise en oeuvre.

L'invention a aussi pour objet un programme d'ordinateur mettant en ouvré un tel procédé.

L'invention a également comme objet un réseau dé communication permettant l'établissement de session(s) de communication entre un client de communication appelant et un client de communication appelé et comportant au moins un équipement de réseau. Le ou les équipements de réseau comprennent au moins un équipement de traduction d'adresses et le réseau de communication comporte en outre des moyens de traversée du ou des équipements de traduction d'adresses.

Le réseau de communication selon l'invention est caractérisé par Le fait qu'en présence, au sein d'un message de signalisation reçu, d'un paramètre représentatif de la mise en oeuvre de moyens de traversée d'équipement de traduction d'adresses par le client de communication, les équipements de réseau ne mettent pas en oeuvre leurs propres moyens de traversée d'équipement de traduction d'adresses.

Selon des mises en oeuvre de l'invention, le message de signalisation émis est conforme au protocole SIP. Il peut s'agir d'un message « Invite », mais également d'outrés types de messages (« Register », « Notify »...)

Le paramètre peut être un conforme au protocole SIP, ou bien un paramètre conforme au protocole SDP.

La solution de traversée d'équipement peut être une solution appartenant à un groupe comportant les mécanismes STUN, ICE, TURN...

Le réseau de communication selon l'invention peut également être prévu pour qu'en l'absence de ce paramètre, les équipements du réseau de communication mettent en oeuvre leurs propres solutions de traversée d'équipement de traduction d'adresses.

Il peut également prévu que lorsqu'un équipement du réseau de communication met en oeuvre sa propre solution de traversée, il insère un paramètre dans le message de signalisation sortant, ce paramètre étant représentatif de cette mise en oeuvre.

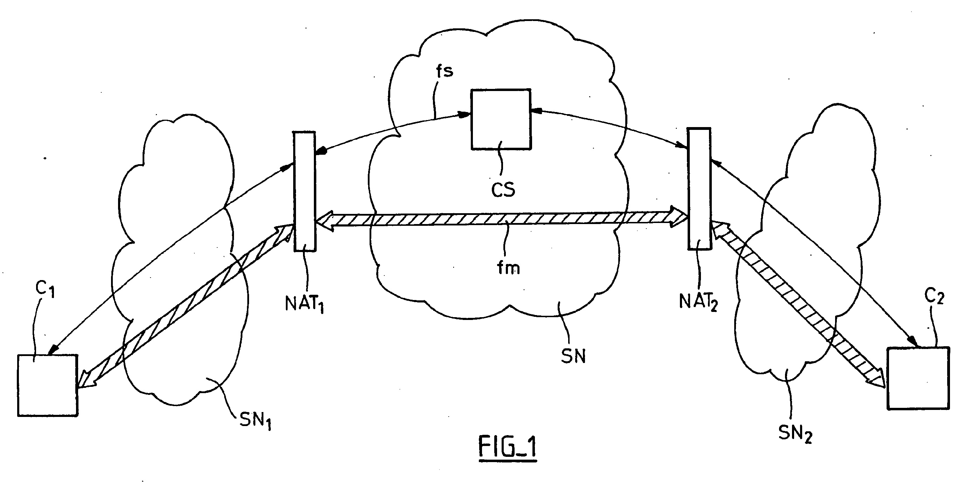

Les caractéristiques et les avantages de l'invention apparaîtront de façon plus claire dans la description qui va suivre, en liaison avec la figure annexée.
Cette figure 1 schématise un exemple de réseau de communication dans lequel l'invention peut être mise en oeuvre.

Dans cet exemple de la figure 1, le réseau de communication est formé de 3 réseaux SN₁, SN₂ et SN, reliés par deux équipements de traduction d'adresses NAT₁ et NAT₂. Il s'agit là d'un cas classique où chaque client de communication C₁ et C₂ est connecté à un sous-réseau privé, respectivement SN₁ et SN₂. Chacun de ces sous-réseaux privés est connecté à un réseau public SN par l'intermédiaire d'un équipement de traduction d'adresses, NAT₁ et NAT₂ respectivement.
D'autres cas sont toutefois possibles. Par exemple, un seul équipement de traduction d'adresses NAT peut être déployé entre deux sous-réseaux privés appartenant à deux parties d'une entreprise. On peut imaginer aussi la situation où l'un des deux clients est connecté à un sous-réseau privé sans usage d'un NAT. Auquel cas, un seul équipement de traduction d'adresses NAT est déployé, entre l'autre sous-réseau privé et le sous-réseau public.

Le réseau de communication (principalement le réseau public SN) comporte au moins un équipement. Ces équipements peuvent être des noeuds de transmission IP, comme des routeurs, mais également des serveurs, des éléments de signalisation, proxy SIP, de serveurs d'appel... Sur la figure 1, par soucis de clarté, seuls les équipements de traduction d'adresses NAT₁ et NAT₂, ainsi qu'un serveur d'appel CS ont été représentés. Ce serveur d'appel CS est considéré par la suite dans son acception la plus générale et recouvre donc les éléments de signalisation « proxy SIP », les « softswitches », les contrôleurs d'appel (« *call controller* ») etc.

L'établissement d'une session de communication fait partie de l'état de la technique bien connue de l'homme de métier. Schématiquement, elle consiste en des étapes de transmission de message de signalisation entre les deux clients de communication C₁ et C₂. Ce flux de signalisation fs est transmis par le serveur d'appel CS situé dans le réseau public SN. Comme évoqué précédemment, ces transmissions de messages de signalisation permettent l'échange des adresses physiques des clients de communication C₁ et C₂, et permettent ainsi l'établissement de la session de communication fm entre les deux clients de communication : le flux média (voix, données, vidéo...) fm peut alors être transmis entre les deux clients en utilisant ces adresses physiques échangées.

Les messages de signalisation transitent par les équipements de traduction d'adresses NAT₁ et NAT₂. Aussi, chacun des deux clients de communication C₁ et C₂ possèdent (pendant une session) une adresse physique publique, attribuée par l'équipement de traduction d'adresses auquel il est attaché et différente de son adresse physique privée.
Afin de pouvoir établir la session de communication fm, les deux clients doivent échanger leurs adresses physiques publiques (et non leurs adresses physiques privées).

On suppose dans l'exemple de la figure 1 que le client de communication appelant C₁ met en oeuvre une solution de traversée d'équipement de traduction d'adresse (« *NAT Traversal* »). Il est entendu par l'expression « mettre en oeuvre » que non seulement le client possède des moyens de traversée d'équipement de traduction d'adresses, mais en outre que ceux-ci sont activés. On peut en effet imaginer la situation où ces moyens sont désactivés pour différentes raisons (panne, dé-configuration manuelle car l'utilisateur les juge pas assez performants etc.)
Ces moyens de traversée peuvent être conformes aux différentes solutions disponibles dans l'état de la technique existant et à venir, qui sont basées sur les clients de communication. On peut ainsi citer les mécanismes STUN, TURN ou ICE, cités précédemment.

Préalablement à l'émission d'un message de signalisation, le client de communication appelant C₁ ajoute dans ce message un paramètre qui représente le fait qu'une solution de traversée d'équipement de traduction d'adresses est mise en oeuvre par le client C₁.
Dans le cadre d'une mise en oeuvre utilisant le protocole SIP, ce message de signalisation est typiquement un message « INVITE ».

Le message de signalisation, une fois émis, est transmis à l'équipement de traduction d'adresses NAT₁, puis à d'autres équipements du réseau public SN. Éventuellement, avant de parvenir à l'équipement de traduction d'adresses NAT₁, il peut également avoir transité par des équipements du sous-réseau privé SN₁.
Certains de ces équipements peuvent posséder des moyens de traversée d'équipements de traduction d'adresses. Ces moyens peuvent être conformes aux solutions exposées précédemment : il peut s'agir de ceux d'une passerelle ALG (Application Layer Gateway) ou d'un serveur SBC (Session Border Controller).
En présence du paramètre représentatif de la mise en oeuvre de moyens de traversée de NAT (par le client C₁) dans le message reçu, ces équipements de réseau ne mettent pas en oeuvre leurs propres moyens de traversée de NAT.

De cette façon, on garantit que dès lors qu'un client de communication met en oeuvre une solution de traversée de NAT, aucun équipement de réseau ne mettre en oeuvre sa solution propre. Il est donc garanti qu'une et une seule solution est mise en oeuvre, pour un appel donné.

Ce paramètre ajouté par le client dans les messages de signalisation émis peut être une entête selon le protocole SIP. Il peut ainsi prendre la forme d'un mot-clé suivi d'une valeur, tel la chaîne :
« X-Media-Processing: No-Processing »

Le terme « X-Media-Processing » est purement indicatif. Il peut s'agir de n'importe quelle chaîne non encore utilisée dans le cadre du protocole SIP et de ses extensions.
La valeur « No-Processing » est elle-aussi indicative, et précise qu'aucun traitement ne doit être effectuée par les équipements de réseau (c'est à dire aucune mise en oeuvre des moyens de traversée de NAT).

Alternativement, le paramètre peut être un paramètre du protocole SDP (*Session Description Protocol*)*.* Il pourrait alors prendre la forme d'un mot-clé suivi d'une valeur, tel la chaîne :
« a=media-processing no-processing »

Dans le cas où les moyens de traversée d'équipement de traduction d'adresses du client de communication C₁ sont indisponibles, il peut :
- soit ne pas ajouter de paramètre représentatif de la mise en oeuvre d'une solution de traversée de NAT dans le message de signalisation émis,
- soit ajouter un paramètre représentatif de la non-mise en oeuvre de solution de traversée de NAT.

Pour ce qui est de la première option, par soucis de compatibilité, les équipements de réseau recevant un message de signalisation ne comportant pas de paramètre représentatif de la mise en oeuvre d'une solution de traversée de NAT adoptent un comportement selon l'état de la technique. Autrement dit, s'ils disposent des moyens de traversée de NAT, ils les mettront en oeuvre.
Pour le second cas, ce paramètre peut être similaire au premier paramètre.
Il peut par exemple s'agir d'un entête SIP qui utilisera le même mot-clé que le premier paramètre. Ainsi, il peut s'agir d'une chaîne de la forme :
« X-Media-Processing: Processing-Required »

La chaîne « Processing-Required » est indicative et signifie qu'aucune solution de traversée de NAT n'étant déployée par le client de communication appelant C₁, une solution doit être mise en oeuvre par un équipement du réseau de communication.
Ce paramètre peut également être ajouté comme un paramètre SDP, ainsi qu'expliqué précédemment.

Un client de communication appelant peut être amené à ajouter un tel paramètre, s'il ne dispose pas de moyens de traversée de NAT, ou bien si, en possédant, ceux-ci ne sont pas disponibles (serveur STUN en panne...) ou parce que l'utilisateur a choisi de les désactiver.

Lorsqu'un équipement de réseau a mis en oeuvre une solution de traversée de NAT, il peut insérer dans le message de signalisation sortant un paramètre représentatif de cette mise en oeuvre, afin qu'un autre éventuel équipement situé sur le chemin du message de signalisation ne mettre également en oeuvre ses propres moyens de traversée de NAT.

Ce mode de réalisation de l'invention permet de résoudre le problème supplémentaire qui pourrait être posé par la présence de plusieurs serveurs SBC ou passerelles ALG au sein d'un réseau de communication.

Ce nouveau paramètre peut être implémenté de différentes façons. Il peut s'agir, par exemple, d'un entête SIP ou d'un paramètre SDP distinct de celui représentatif de la mise en oeuvre d'une solution de traversée par le client. Il peut également s'agir du même entête SIP ou du même paramètre SDP, prenant alors une valeur spécifique.

Dans le cas d'une implémentation utilisant un entête SIP, ce paramètre peut prendre la forme de la chaîne « X-Media-Processing: Processed », le mot-clé « Processed » étant arbitraire.

Si le message de signalisation entrant contenait un paramètre (par exemple associé à la valeur « Processing-Requested »), sa valeur est modifiée par l'équipement pour devenir « Processed » dans le message de signalisation sortant.
Si le message de signalisation entrant ne contenait pas de paramètre, celui-ci peut alors l'ajouter dans le message de signalisation sortant.

## Revendications

1. Procédé d'établissement d'une session de communication (fm) entre un client de communication appelant (C₁) et un client de communication appelé (C₂), au travers d'un réseau de communication (SN₁, SN, SN₂) comportant au moins un équipement de traduction d'adresses (NAT₁, NAT₂), ledit procédé comportant des étapes de transmissions de messages de signalisation (fs), transitant par ledit au moins un équipement de traduction d'adresses et permettant l'échange des adresses physiques desdits clients de communication pour l'établissement de ladite session de communication, procédé dans lequel au moins un desdits clients de communication met en oeuvre une solution de traversée d'équipement de traduction d'adresses, et **caractérisé en ce que** ledit au moins un client de communication ajoute au sein d'un message de signalisation émis, un paramètre représentatif de la mise en oeuvre de ladite solution de traversée, et **en ce qu'**en présence d'un tel paramètre, les équipements dudit réseau de communication ne mettent pas en oeuvre leurs propres solutions de traversée d'équipement de traduction d'adresses.

2. Procédé d'établissement d'une session de communication selon la revendication 1, dans lequel ledit message de signalisation émis est un message conforme au protocole SIP.

3. Procédé d'établissement d'une session de communication selon la, revendication précédente, dans lequel ledit message de signalisation émis est uni message conforme « Invite »,

4. Procédé d'établissement d'une session de communication selon l'une des revendications précédentes, dans lequel ladite solution de traversée est conforme à un mécanisme pris au sein d'un groupe comprenant les mécanismes STUN, TURN et ICE.

5. Procédé d'établissement d'une session de communication selon l'une des revendications 2 à 4, dans lequel ledit paramètre est un entête conforme au protocole SIP.

6. Procédé d'établissement d'une session de communication selon l'une des revendications 2 à 4, dans lequel ledit paramètre est un paramètre conforme au protocole SDP.

7. Procédé d'établissement d'une session de communication selon l'une des revendications précédentes, dans lequel en l'absence dudit paramètre, les équipements dudit- réseau de communication mettent en oeuvre leurs propres solutions de traversée d'équipement de traduction d'adresses.

8. Procédé d'établissement d'une session de communication selon la revendication précédente, dans lequel lorsqu'un équipement dudit réseau de communication met en oeuvre sa propre solution de traversée, il inséré un paramètre dans le message de signalisation sortant, représentatif de cette mise en oeuvre.

9. Réseau de communication (SN₁, SN_{2,} N) permettant l'établissement de session de communication (fm) entre un client de communication appelant (C₁) et un client de communication appelé (C₂) et comportant au moins un équipement de réseau, ledit au moins un équipement de réseau comprenant au moins un équipement de traduction d'adresses (NAT₁, NAT₂) et ledit réseau de communication comportant en outre des moyens de traversée dudit au équipements de réseau sont aptes à ne pas mettre en oeuvre leurs propres moyens de traversée d'équipement de traduction d'adresses, en présente d'un paramètre représentatif de la mise en oeuvre de moyens de traversée d'équipement de traduction d'adresses par le client de communication, au sein d'un message de signalisation reçu.

10. Réseau de communication selon la revendication précédente, dans lequel ledit message de signalisation reçu est un message conforme au protocole SIP.

11. Réseau de communication selon la revendication précédente, dans lequel ledit message de signalisation reçu est un message « Invite ».

12. Réseau de communication selon l'une des revendications 9 à 11, dans lequel ladite solution de traversée est conforme à un mécanisme pris au sein d'un groupe comprenant les mécanismes STUN, TURN et ICE.

13. Réseau de communication selon l'une des revendications 10 à 12, dans lequel ledit paramètre est un entête conforme au protocole SIP.

14. Réseau de communication selon l'une des revendications 10 à 12, dans lequel ledit paramètre est un paramètre conforme au protocole SDP.

15. Réseau de communication selon l'une des revendications 10 à. 14, dans lequel en l'absence dudit paramètre, les équipements dudit réseau de communication sont aptes à mettre en oeuvre leurs propres solutions de traversée d'équipement de traduction d'adresses.

16. Réseau due communication selon la revendication précédente, oeuvre sa propre solution de traversée, il insère un paramètre dans le message de signalisation sortant, représentatif de cette mise en oeuvre.

17. Programme d'ordinateur comportant des instructions aptes à mettre en oeuvre le procédé selon l'une des revendications 1 à 8.

## Claims

1. A method of setting up communication session (fm) between a calling communication client (C-₁) and a called communication client (C₂), through a communication network (SN₁, SN, SN₁) comprising at least one address translation device (NAT_{1,} NAT₂), said method comprising stages of transmitting signaling message (fs) that pass through said at least one address translation device and enable the exchange of the physical addresses of said communication clients for setting up said communication session, method in which at least one of said communication clients implements an address translation device traversal solution, and **characterized in that** said at least one communication client adds within a sent signaling message a parameter representing the implementation of said traversal solution, and **in that** in the presence of such a parameter, the devices of said communication network do not implement their own address translation device traversal solutions.

2. A method of setting up a communication session according to claim 1, in which said signaling message sent is a message that complies with the SIP protocol.

3. A method of setting up a communication session according to the preceding claim, in which said signaling message sent is an "Invite" compliant message.

4. A method of setting up a communication session according to one of the preceding claims, in which said traversal solution complies with a mechanism taken within a group including the STUN, TURN and ICE mechanisms.

5. A method of setting up a communicatíon session according to one of claims 2 to 4, in which said parameter is a header that compiles with the SIP protocol.

6. A method of setting up a communication session according to one of claims 2 to 4, in which said parameter is a header that complies with the SDP protocol.

7. A method of setting up a communication session according to one of the preceding claim, in which in the absence of said parameter, the devices of said communication network implement their own address translation device traversal solutions.

8. A method of setting up a communication session according to the preceding claim, in which whenever a device of said communication network implements its own traversing solution, it inserts a parameter into the outgoing signaling message, representing this implementation.

9. A communication network (SN₁, SN₂, SN) enabling the setting up of a communication session (fm) between a calling communication client (C₁ and a called communication client (C₂) and including at least one network device, said at least one network device including at least one address translation eq (NAT₁ NAT₂) and said communication network also including means for traversing said at least one address translation device, **characterized in that** said network device is able to not implement its own means of traversing address translation devices in the presence of a parameter representing the implementation of means of traversing address translation devices by the communication client, within a received signaling message,

10. A communication network according to the preceding claim, in which said received signaling message is a message that complies with the SIP protocol.

11. A communication network according to the preceding claim, in which said received signaling message is an "Invite" message,

12. A communication network according to one of claims 9 to 11, in which said traversal solution complies with a mechanism taken within a group including the STUN, TURN and ICE mechanisms.

13. A communication network according to one of claims 10 to 12, in which said parameter is a header that complies with the SIP protocol,

14. A communication network according to one of claims 10 to 12, in which said parameter is a parameter that complies with the SDP protocol.

15. A communication network according to one of claims 10 to 14, in which in the absence of said parameter, the devices of said communication network are able to implement their own address translation device traversal solutions.

16. A communication network according to the preceding claim, in which whenever a device of said communication network implements its own traversal solution, it inserts a parameter into the outgoing signaling message, representing this implementation,

17. A computer program comprising instructions for implementing the method according to one of claims 1 to 8.

## Patentansprüche

1. Verfahren für den Aufbau einer Kommunikationssitzung (fm) zwischen einem anrufenden Kommunikations-Client (C₁) und einem angerufenen Kommunikations-Client (C₂) über ein Kommunikationsnetzwerk (SN₁, SN, SN₂) mit mindestens einer Adressübersetzungsvorrichtung (NAT₁, NAT₂), wobei das besagte Verfahren Schritte der Übertragung von Signalisierungsnachrichten (fs), welche die besagte mindestens eine Adressübersetzungsvorrichtung durchqueren und den Austausch von physischen Adressen der besagten Kommunikations-Clients für den Aufbau der besagten Kommunikationssitzung ermöglichen, umfasst; Verfahren, in welchem mindestens einer der besagten Kommunikations-Clients eine Adressenübersetzungsvorrichtungs-Traversallösung implementiert, und **dadurch gekennzeichnet, dass** der besagte mindestens eine Kommunikations-Client innerhalb einer ausgegebenen Signalisierungsnachricht einen Parameter, welcher für die Implementierung der besagten Traversallösung repräsentativ ist, hinzufügt, und dass die Einrichtungen des besagten Kommunikationsnetzwerks im Fall des Vorhandenseins eines solchen Parameters nicht ihre eigenen Adressenübersetzungsvorrichtungs-Traversaltösungen implementieren.

2. Verfahren für den Aufbau einer Kommunikationssitzung nach Anspruch 1, wobei die besagte ausgegebene Signalsierungsnachricht eine dem SIP-Protokoll entsprechende Nachricht ist.

3. Verfahren für den Aufbau einer Kommunikationssitzung nach dem vorstehenden Anspruch, wobei die besagte ausgegebene Signalisierungsnachricht eine "Invite"-Nachricht ist.

4. Verfahren für den Aufbau einer Kommunikationssitzung nach einem der vorstehenden Ansprüche, wobei die besagte Traversallösung einem aus einer Gruppe bestehend aus den Mechanismen STUN, TURN und ICE gewählten Mechanismus entspricht.

5. Verfahren für den Aufbau einer Kommunikationssitzung nach einem der Ansprüche 2 bis 4, wobei der besagte Parameter ein dem SIP-Protokoll entsprechender Header ist.

6. Verfahren für den Aufbau einer Kommunikationssitzung nach einem der Ansprüche 2 bis 4, wobei der besagte Parameter ein dem SDP-Protokoll entsprechender Parameter ist.

7. Verfahren für den Aufbau einer Kommunikationssitzung nach einem der vorstehenden Ansprüche, wobei die Einrichtungen des besagten Kommunikationsnetzwerks in Abwesenheit des besagten Parameters fähig sind, ihre eigenen Adressenübersetzungsvorrichtungs-Traversallösungen zu implementieren.

8. Verfahren für den Aufbau einer Kommunikationssitzung nach dem vorstehenden Anspruch, wobei, wenn eine Einrichtung des besagten Kommunikationsnetzwerks ihre eigene Traversallösung implementiert, sie einen Parameter in die ausgehende Signalisierungsnachricht einfügt, welcher für diese Implementierung repräsentativ ist.

9. Kommunikationsnetzwerk (SN₁, SN₂, N) für den Aufbau einer Kommunikationssitzung (fm) zwischen einem anrufenden Kommunikations-Client (C₁) und einem angerufenen Kommunikations-Client (C₂) mit mindestens einer Netzwerkeinrichtung, wobei die besagte mindestens eine Netzwerkeinrichtung mindestens eine Adressenübersetzungsvorrichtung (NAT₁, NAT₂) umfasst, und wobei das besagte Kommunikationsnetzwerk weiterhin Mittel zum Durchqueren der besagten mindestens einen Adressenübersetzungsvorrichtung umfasst, **dadurch gekennzeichnet, dass** die besagten Netzwerkeinrichtungen fähig sind, nicht ihre eigenen Mittel zum Durchqueren einer Adressenübersetzungsvorrichtung zu implementieren, wenn ein für die Implementierung der Mittel zum Durchqueren der Adressenübersetzungsvorrichtung durch den Kommunikations-Client repräsentativer Parameter innerhalb einer empfangenen Signalisierungsnachricht vorhanden ist.

10. Kommunikationsnetzwerk nach dem vorstehenden Anspruch, wobei die besagte empfangene Signalisierungsnachricht eine dem SIP-Protokoll entsprechende Nachricht ist.

11. Kommunikationsnetzwerk nach dem vorstehenden Anspruch, wobei die besagte empfangene Signalisierungsnachricht eine "Invite"-Nachricht ist.

12. Kommunikationsnetzwerk nach einem der Ansprüche 9 bis 11, wobei die besagte Traversallösung einem aus einer Gruppe bestehend aus den Mechanismen STUN, TURN und ICE gewählten Mechanismus entspricht.

13. Kommunikationsnetzwerk nach einem der Ansprüche 10 bis 12, wobei der besagte Parameter ein dem SIP-Protokoll entsprechender Header ist.

14. Kommunikationsnetzwerk nach einem der Ansprüche 10 bis 12, wobei der besagte Parameter ein dem SDP-Protokoll entsprechender Parameter ist.

15. Kommunikationsnetzwerk nach einem der Ansprüche 10 bis 14, wobei die Vorrichtungen des besagten Kommunikationsnetzwerks in Abwesenheit des besagten Parameters fähig sind, ihre eigenen Traversallösungen der Adressenübersetzungsvorrichtung zu implementieren.

16. Kommunikationsnetzwerk nach dem vorstehenden Anspruch, wobei, denn eine Vorrichtung des besagten Kommunikationsnetzwerks ihre eigene Traversallösung implementiert, sie einen Parameter in die ausgehende Signalisierungsnachricht einfügt, welcher für diese Implementierung repräsentativ ist.

17. Computerprogramm mit Befehlen für die Implementierung des Verfahrens nach einem der Ansprüche 1 bis 8.
